# EUROPEAN PATENT SPECIFICATION

(11) **EP 2 208 906 B1**
(45) Date of publication and mention of the grant of the patent: **28.11.2012**
(21) Application number: 10150818.2
(22) Date of filing: 15.01.2010
(51) Int. Cl.: F16D 48/06, F16D 29/00

(54) **Control apparatus and control method for actuator**
Steuerungsvorrichtung und Steuerungsverfahren für Aktuator
Appareil de commande et procédé de commande pour un actionneur

(30) Priority: 16.01.2009 JP 2009007947
(43) Date of publication of application: 21.07.2010
(73) Proprietor: Toyota Jidosha Kabushiki Kaisha, Toyota-shi, Aichi 471-8571 (JP); Aisin Seiki Kabushiki Kaisha, Kariya-shi, Aichi 448-8650 (JP)
(72) Inventor: Kato, Junichi, Toyota-shi, Aichi 471-8571 (JP); Munakata, Satoshi, Toyota-shi, Aichi 471-8571 (JP); Suzuki, Michinobu, Toyota-shi, Aichi 471-8571 (JP); Ichikawa, Akihiko, Toyota-shi, Aichi 471-8571 (JP); Kinoshita, Tomonori, Toyota-shi, Aichi 471-8571 (JP); Suga, Shojiro, Toyota-shi, Aichi 471-8571 (JP); Soga, Yoshitaka, Kariya-shi, Aichi 448-8650 (JP); Nakanishi, Koji, Kariya-shi, Aichi 448-8650 (JP)
(74) Representative: TBK

(56) References cited:
- DE-A1-102005 041 420
- FR-A1- 2 777 230
- JP-A- 2002 021 881
- JP-A- 2006 349 000

## Description

### BACKGROUND OF THE INVENTION

### 1. Field of the Invention

The invention relates to a control apparatus and a control method for an actuator. Particularly, the invention relates to a control apparatus and a control method for an actuator that supplies a hydraulic pressure to a slave cylinder in which a piston is slid to disengage and engage a clutch, and the piston is divided into two portions.

### 2. Description of the Related Art.

It has been known that in a vehicle provided with a manual transmission, a clutch is provided between a drive power source such as an engine, and the manual transmission. There is a vehicle in which an actuator is used to supply a hydraulic pressure to a slave cylinder that disengages and engages the clutch, in order to automatically control the state of the clutch without the need of a clutch pedal operation performed by a driver.

US Patent No. 6273231 describes a release system for a clutch. The release system includes a ring piston, and a seal that seals a hydraulic pressure chamber to which the hydraulic pressure is supplied to slide the ring piston. When the hydraulic pressure is supplied to the hydraulic pressure chamber, the ring piston is slid toward the clutch together with the seal, and thus, the clutch is disengaged.

However, in the case where the piston and the seal in the slave cylinder are formed separately from each other, if a negative pressure is generated in the hydraulic pressure chamber for some reasons, only the seal may be moved away from the clutch. Accordingly, a gap is formed between the piston and the seal. In this situation, even if the hydraulic pressure is supplied to the slave cylinder, that is, an operation amount (i.e., a stroke) of an actuator, which supplies the hydraulic pressure to the slave cylinder, is increased, the piston does not move, as long as the piston is away from the seal. Accordingly, for example, when learning the operation amount of the actuator at a time point at which engagement of the clutch starts, that is, when learning a so-called meet point, an error corresponding to a distance between the piston and the seal occurs.

Document JP 2006 349000 A discloses a controller for an actuator capable of controlling a clutch. An ECU performs a program including a step for supplying oil pressure irrespective of a detection signal from a stroke sensor while determination of abnormality of a slave cylinder based on changes of a position of a piston of the slave cylinder is inhibited when supplying oil pressure to the slave cylinder for the first time at a factory if there is no history for supplying oil pressure into an oil chamber of the slave cylinder from an oil pressure generation source, that is, in an initial condition after assembly of the slave cylinder.

Document FR 2 777 230 A1 discloses a hydraulic clutch system for a vehicle transmission, which has a control system which eliminates transient effects and external effects e.g. from sudden changes in temperature, by including a compensation system to cover these effects. The master clutch cylinder is driven by a servo drive with the compensation applied to the servo drive. The system includes a torque limiter for the clutch.

### SUMMARY OF THE INVENTION

It is an object of the invention to provide a control apparatus and a control method for an actuator, which accurately learn an operation amount of an actuator at a time point at which engagement of a clutch starts.

This object is achieved by a control apparatus according to claim 1 and a control method according to claim 4. Advantageous further developments are as set forth in the respective dependent claims.

A first aspect relates to a control apparatus for an actuator that supplies a hydraulic pressure to a slave cylinder in which a first piston and a second piston are provided. The first piston is slid in the cylinder to disengage and engage a clutch, the second piston is formed separately from the first piston, the second piston forms a portion of an oil chamber to which the hydraulic pressure is supplied, the second piston is slid in the cylinder to move the first piston, by the hydraulic pressure supplied to the oil chamber, and the second piston is moved a distance corresponding to an operation amount of the actuator. The control apparatus includes means for detecting the operation amount of the actuator; control means for controlling the actuator so that the clutch is repeatedly disengaged and engaged; and learning means for learning the operation amount of the actuator at a time point at which engagement of the clutch starts, after the clutch is repeatedly disengaged and engaged.

With the configuration, the clutch is engaged and disengaged using the slave cylinder in which the first piston and the second piston are provided. The first piston is slid in, the cylinder. The second piston is formed separately from the first piston. The second piston forms a portion of the oil chamber to which the hydraulic pressure is supplied. The second piston is slid in the cylinder to move the first piston, by the hydraulic pressure supplied to the oil chamber. Before learning the operation amount of the actuator at the time point at which the engagement of the clutch starts, the clutch is repeatedly disengaged and engaged. Thus, the hydraulic pressure in the oil chamber of the slave cylinder is increased, and the hydraulic pressure in the oil chamber is changed to a positive pressure. If the clutch is disengaged and engaged when the first piston and the second piston are away from each other, for example, the oil is supplied from a reservoir tank to the oil chamber, and thus, the amount of the oil in the oil chamber is increased. Therefore, by repeatedly disengaging and engaging the clutch, the hydraulic pressure in the oil chamber is changed to a positive pressure. Accordingly, the first piston contacts the second piston. As a result, when the operation amount of the clutch actuator is increased, the first piston is moved. In this situation, the operation amount of the actuator at the time point at which the engagement of the clutch starts is learned. Therefore, it is possible to decrease an error that occurs when learning the operation amount of the actuator at the time point at which the engagement of the clutch starts. As a result, it is possible to accurately learn the operation amount of the actuator at the time point at which the engagement of the clutch starts.

In the control apparatus for the actuator according to the above-described aspect, the control means further controls the actuator so that the clutch is repeatedly disengaged and engaged, if there is no history indicating that the operation amount of the actuator at the time point at which the engagement of the clutch starts has been learned.

With the configuration, if there is no history indicating that the operation amount of the actuator at the time point at which the engagement of the clutch starts has been learned, the clutch is repeatedly disengaged and engaged. Thus, the clutch is repeatedly disengaged and engaged only when necessary.

In the control apparatus for the actuator according to the above-described aspect, the control means may control the actuator so that the clutch is repeatedly disengaged and engaged a predetermined number of times.

In the control apparatus for the actuator according to the above-described aspect, the clutch may be provided between a drive power source and a transmission; and the learning means may learn the operation amount of the actuator at a time point at which an output rotational speed of the drive power source starts to decrease when the actuator is controlled to change a state of the clutch from a disengaged state to an engaged state, as the operation amount of the actuator at the time point at which the engagement of the clutch starts.

With the configuration, when the output rotational speed of the drive power source starts to decrease, it is possible to detect the operation amount of the actuator at the time point at which the engagement of the clutch starts.

A second aspect of the invention relates to a control method for an actuator that supplies a hydraulic pressure to a slave cylinder in which a first piston and a second piston are provided. The first piston is slid in the cylinder to disengage and engage a clutch, the second piston is formed separately from the first piston, the second piston forms a portion of an oil chamber to which the hydraulic pressure is supplied, the second piston is slid in the cylinder to move the first piston, by the hydraulic pressure supplied to the oil chamber, and the second piston is moved a distance corresponding to an operation amount of the actuator. The control method includes the steps of controlling the actuator so that the clutch is repeatedly disengaged and engaged; and learning the operation amount of the actuator at a time point at which engagement of the clutch starts, after the clutch is repeatedly disengaged and engaged.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG 1 is a schematic diagram showing a power train of a vehicle;
FIG. 2 is a diagram showing a clutch, a slave cylinder, and a clutch actuator;
FIG 3 is a functional block diagram of an ECU;
FIG 4 is a flowchart showing a control structure of a program executed by the ECU; and
FIG 5 is a diagram showing the slave cylinder when a negative pressure is generated in an oil chamber.

### DETAILED DESCRIPTION OF EMBODIMENTS

Hereinafter, an embodiment of the invention will be described with reference to the drawings. In the following description, the same or corresponding components are denoted with the same reference numerals, and have the same names and the same functions, and therefore, the detailed description thereof will not be repeated.

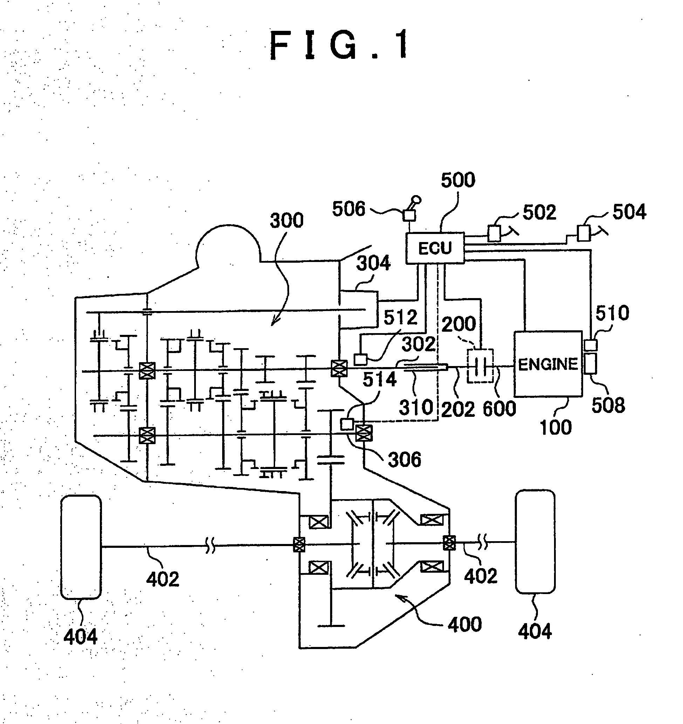

As shown in FIG. 1, in a vehicle, drive power generated by an engine 100 is transmitted to wheels 404 through a clutch 200, a transmission 300, a differential gear 400, and a drive shaft 402. Thus, the vehicle travels. An Electronic Control Unit (ECU) 500 controls the engine 100, the clutch 200, and the transmission 300. The ECU 500 may include a plurality of ECUs that control the engine 100, the clutch 200, and the transmission 300, respectively.

The clutch 200 is connected to a crankshaft 600 of the engine 100. A clutch output shaft 202 is connected to an input shaft 302 of the transmission 300 through a spline 310.

The transmission 300 includes a constant mesh gear train. In the transmission 300, a gear is selected by sliding a shift fork shaft using an actuator 304. The actuator 304 may be hydraulically-operated, or may be electrically-operated.

The ECU 500 receives signals transmitted from an accelerator operation amount sensor 502, a brake switch 504, a position sensor 506, a crank position sensor 510 provided to face an outer periphery of a timing rotor 508, an input shaft rotational speed sensor 512, and an output shaft rotational speed sensor 514.

The accelerator operation amount sensor 502 detects an operation amount of an accelerator pedal. The brake switch 504 detects whether a brake is operated or released. The position sensor 506 detects a shift position of a shift lever. The crank position sensor 510 detects an engine rotational speed NE. The input shaft rotational speed sensor 512 detects a rotational speed NI of the input shaft 302 of the transmission 300. The output shaft rotational speed sensor 514 detects a rotational speed NO of an output shaft 306 of the transmission 300.

The ECU 500 performs computations based on the signals transmitted from the sensors, and programs, maps, and shift lines stored in a memory (not shown). Thus, the ECU 500 controls the engine 100, the clutch 200, and the transmission 300.

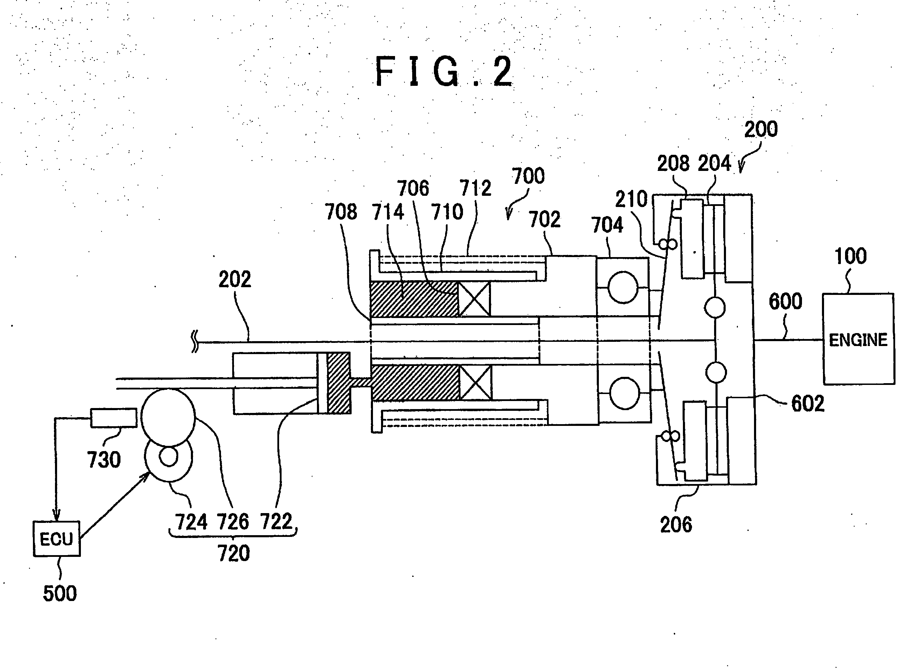

As shown in FIG 2, the clutch 200 and a slave cylinder 700 will be described. In the embodiment, the slave cylinder 700 is a Concentric Slave Cylinder (CSC).

The clutch 200 is a dry-type single-disc friction clutch. As shown in FIG 2, the clutch 200 includes a clutch output shaft 202, a clutch disc 204 provided on the clutch output shaft 202, a clutch housing 206, a pressure plate 208 disposed in the clutch housing 206, and a diaphragm spring 210.

When the diaphragm spring 210 presses the pressure plate 208 toward the right side in FIG. 2, the clutch disc 204 is pressed to a flywheel 602 attached to the crankshaft 600 of the engine 100, and thus, the clutch 200 is engaged.

When an inner end portion of the diaphragm spring 210 is moved toward the right side in FIG. 2, the pressure plate 208 is moved toward the left side in FIG 2, and the clutch disc 204 is moved away from the flywheel 602. Thus, the clutch 200 is disengaged.

The slave cylinder 700 includes a first piston 702, a bearing 704, a second piston 706, an inner cylinder 708, an outer cylinder 710, a spring 712, and an oil chamber 714.

An end portion of the first piston 702 contacts the inner end portion of the diaphragm spring 210 through the bearing 704.

If the first piston 702 is slid toward the right side in FIG. 2 when the clutch 200 is in an engaged state, the inner end portion of the diaphragm spring 210 is moved toward the right side in FIG. 2. As a result, the clutch 200 is disengaged.

If the first piston 702 is slid toward the left side in FIG. 2 when the clutch 200 is in a disengaged state, the inner end portion of the diaphragm spring 210 is moved toward the left side in FIG. 2. As a result, the clutch 200 is engaged.

The second piston 706, which functions as a seal member, is provided on the other end portion of the first piston 702. The first piston 702 and the second piston 706 are formed separately from each other. The first piston 702 and the second piston 706 are movable in a direction of an axis of the clutch output shaft 202, in a ring-shaped space between the inner cylinder 708 and the outer cylinder 710.

The spring 712 is provided around an outer periphery of the outer cylinder 710 to press the first piston 702 toward the diaphragm spring 210. The first piston 702 constantly contacts the diaphragm spring 210 through the bearing 704 due to the pressing force of the spring 712.

The oil chamber 714 is formed by the second piston 706, the inner cylinder 708, and the outer cylinder 710. A hydraulic pressure is supplied to the oil chamber 714 by a clutch actuator 720 controlled by the ECU 500.

The clutch actuator 720 includes a piston 722, a motor 724, and a spur gear 726. By sliding the piston 722 in the cylinder, the hydraulic pressure is supplied to the oil chamber 714, and is discharged from the oil chamber 714.

When the hydraulic pressure is supplied from the piston 722 to the oil chamber 714, the second piston 706 is moved toward the right side in FIG. 2 together with the first piston 702. Thus, the clutch 200 is disengaged (i.e., power transmission is interrupted).

When the hydraulic pressure is discharged from the oil chamber 714, the first piston 702 and the second piston 706 are moved toward the left side in FIG. 2 due to the pressing force of the diaphragm spring 210. Thus, the clutch 200 is engaged.

The piston 722 is operated by the motor 724 through the spur gear 726. When the motor 724 is rotated, the spur gear 726 is rotated. The spur gear 726 is provided to engage with a rack formed on the piston 722. When the spur gear 726 is rotated, the piston 722 is slid in the cylinder.

The second piston 706 is moved a distance corresponding to an operation amount of the clutch actuator 720, that is, a stroke of the clutch actuator 720. The stroke of the clutch actuator 720 is detected using a stroke sensor 730. By detecting the stroke of the clutch actuator 720, the state of the clutch 200 is indirectly detected.

The stroke sensor 730 detects a rotational angle of the spur gear 726 as the stroke of the clutch actuator 720. The method of detecting the stroke of the clutch actuator 720 is not limited to this method.

A signal indicating the result of detection performed by the stroke sensor 730 is transmitted to the ECU 500. The ECU 500 determines whether the clutch 200 is in the disengaged state, the engaged state, or a semi-engaged state, based on the signal transmitted from the stroke sensor 730.

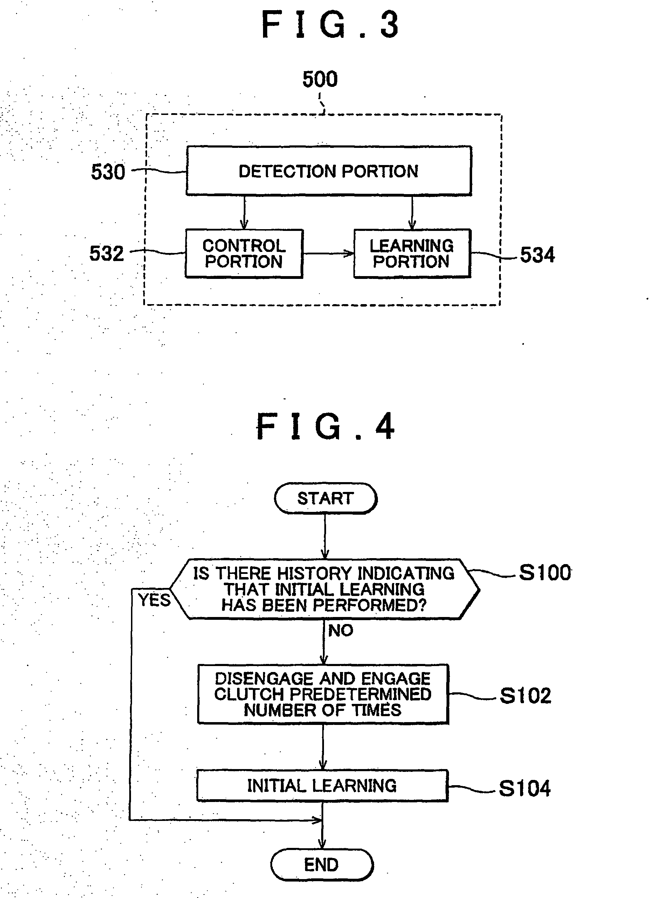

Functions of the ECU 500 will be described with reference to FIG. 3. The ECU 500 includes a detection portion 530, a control portion 532, and a learning portion 534. The detection portion 530 detects the stroke of the clutch actuator 720 based on the signal transmitted from the stroke sensor 730.

The control portion 532 controls the clutch actuator 720 so that the clutch 200 is repeatedly disengaged and engaged a predetermined number of times, preferably a plurality of times. That is, pumping is performed by the clutch actuator 720 the predetermined number of times.

The control portion 532 controls the clutch actuator 720 so that the clutch 200 is disengaged and engaged the predetermined number of times, if there is no history indicating that the initial learning of the stroke of the clutch actuator 720 has been performed.

The word "the initial learning of the stroke of the clutch actuator 720" signifies the learning (detection) of, for example, the stroke of the clutch actuator 720 at a time point at which the engagement of the clutch 200 starts, that is, the learning (detection) of a so-called meet point at which the clutch 200 starts to transmit torque.

It is determined whether there is a history indicating that the initial learning of the stroke of the clutch actuator 720 has been performed, for example, based on whether a flag is on. However, the method of determining whether there is a history indicating that the initial learning of the stroke of the clutch actuator 720 has been performed is not limited to this method.

It is determined whether the clutch 200 is engaged, based on whether the stroke of the clutch actuator 720 has reached a first value that is set in advance. Similarly, it is determined whether the clutch 200 is disengaged, based on whether the stroke of the clutch actuator 720 has reached a second value that is set in advance. For example, the first value used to determine whether the clutch 200 is engaged, and the second value used to determine whether the clutch 200 is disengaged are set in advance by a designer, based on specifications of the clutch actuator 720 and the like.

After the clutch actuator 720 is controlled so that the clutch 200 is repeatedly disengaged and engaged the predetermined number of times, the learning portion 534 performs the initial learning of the stroke of the clutch actuator 720.

In the initial learning of the stroke of the clutch actuator 720, for example, the learning portion 534 learns the stroke of the clutch actuator 720 at a time point at which the engine rotational speed NE starts to decrease when the clutch actuator 720 is controlled to change the state of the clutch 200 from the disengaged state to the engaged state while the engine 100 is operating, as the stroke at the time point at which the engagement of the clutch 200 starts. The stroke at the time point at which the engagement of the clutch 200 starts is stored in the memory of the ECU 500. The method of performing the initial learning is not limited to this method. As the method of performing the initial learning, various methods may be employed.

A control structure of a program executed by the ECU 500 will be described with reference to FIC. 4. In step S100, the ECU 500 determines whether there is a history indicating that the initial learning of the stroke of the clutch actuator 720 has been performed. If there is a history indicating that the initial learning of the stroke of the clutch actuator 720 has been performed (YES in step S100), the routine ends. If there is no history indicating that the initial learning of the stroke of the clutch actuator 720 has been performed (NO in step S100), the routine proceeds to step S102.

In step S102, the ECU 500 controls the clutch actuator 720 so that the clutch 200 is repeatedly disengaged and engaged the predetermined number of times.

In step S104, the ECU 500 performs the initial learning of the stroke of the clutch actuator 720.

Operation of the ECU 500, which has the above-described configuration, and operates based on the above-described flowchart, will be described. The ECU 500 is a control apparatus according to the embodiment.

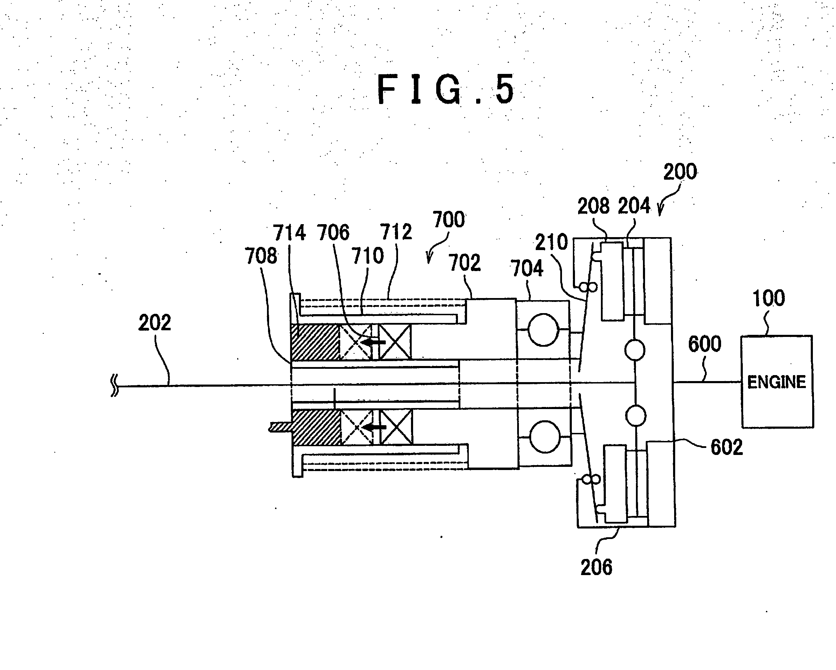

In the case where a vehicle is assembled, when Automatic Transmission Fluid (ATF) is supplied to the oil chamber 714 of the slave cylinder 700 under vacuum, and then, the level of the ATF is adjusted, a negative pressure may be generated in the oil chamber 714. In this case, as shown in FIG 5, only the second piston 706 may be moved, and as a result, the first piston 702 and the second piston 706 may be away from each other.

When a vehicle system is started after the assembly of the vehicle is completed, the slave cylinder 700 may remain in the above-described state. In this case, even if the hydraulic pressure is supplied to the slave cylinder 700, the first piston 702 is not moved until the second piston 706 contacts the first piston 702. Therefore, the stroke of the clutch actuator 720 at the meet point of the clutch 200 may be erroneously learned due to a distance between the first piston 702 and the second piston 706.

In order to avoid the erroneous learning of the stroke of the clutch actuator 720, if there is no history indicating that the initial learning of the stroke of the clutch actuator 720 has been performed (NO in step S100), the clutch actuator 720 is controlled so that the clutch 200 is repeatedly disengaged and engaged the predetermined number of times (S 102).

Thus, the hydraulic pressure in the oil chamber 714 of the slave cylinder 700 is increased the predetermined number of times. Thus, the hydraulic pressure in the oil chamber 714 is changed to a positive pressure. If the clutch 200 is repeatedly disengaged and engaged when the first piston 702 and the second piston 706 are away from each other, the ATF is supplied from a reservoir tank to the oil chamber 714, and thus, the amount of the oil in the oil chamber 714 is increased. Therefore, by repeatedly disengaging and engaging the clutch 200, the hydraulic pressure in the oil chamber 714 is changed to a positive pressure. Accordingly, the first piston 702 contacts the second piston 706. As a result, when the stroke of the clutch actuator 720 is increased, the first piston 702 is moved.

It is preferable to empirically determine in advance the number of times the clutch 200 needs to be repeatedly disengaged and engaged to eliminate the gap between the first piston 702 and the second piston 706 (i.e., the number of times the clutch 200 needs to be repeatedly disengaged and engaged to make the first piston 702 and the second piston 706 contact each other), in a unit to be used, and to set in advance the number of times so that the clutch 200 is repeatedly disengaged and engaged the set number of times. This is because the number of times the clutch 200 needs to be repeatedly disengaged and engaged to eliminate the gap between the first piston 702 and the second piston 706 depends mainly on the structure of a master cylinder, the slide resistance of a piston cup, and the like, and therefore, the number of times the clutch 200 needs to be repeatedly disengaged and engaged may vary among units.

Then, the initial learning of the stroke of the clutch actuator 720 is performed (S104). Therefore, it is possible to decrease an error when learning the stroke of the clutch actuator 720 at the time point at which the engagement of the clutch 200 starts. As a result, it is possible to accurately learn the stroke of the clutch actuator 720 at the time point at which the engagement of the clutch 200 starts.

In an embodiment not belonging to the invention instead of repeatedly disengaging and engaging the clutch 200 a predetermined number of times, a stroke sensor that directly detects the stroke of the first piston 702 of the slave cylinder 700 may be provided; and it may be determined whether the gap between the first piston 702 and the second piston 706 has been eliminated (i.e., the first piston 702 and the second piston 706 contact each other) by detecting the stroke of the first piston 702 in response to a disengagement control for disengaging the clutch 200 and the stroke of the first piston 702 in response to an engagement control for engaging the clutch 200. For example, if the start of the stroke of the first piston 702 lags behind the disengagement control (i.e., if the start of the stroke of the first piston 702 lags behind the supply of the hydraulic pressure to the oil chamber 714), it may be determined that the gap between the first piston 702 and the second piston 706 has not been eliminated (i.e., the first piston 702 and the second piston 706 do not contact each other). If the start of the stroke of the first piston 702 does not lag behind the disengagement control (i.e., if the start of the stroke of the first piston 702 does not lag behind the supply of the hydraulic pressure to the oil chamber 714), it may be determined that the gap between the first piston 702 and the second piston 706 has been eliminated (i.e., the first piston 702 and the second piston 706 contact each other), and a control for eliminating the gap between the first piston 702 and the second piston 706 may end.

Thus, the embodiment of the invention that has been disclosed in the specification is to be considered in all respect as illustrative and not restrictive. The technical scope of the invention is defined by claims.
An EGU executes a program that includes a step (S102) of controlling a clutch actuator that supplies a hydraulic pressure to a slave cylinder so that the clutch is repeatedly disengaged and engaged; and a step (S104) of performing initial learning of a stroke of the clutch actuator, after controlling the clutch actuator so that the clutch is repeatedly disengaged and engaged.

## Claims

1. A control apparatus for an actuator (720) that supplies a hydraulic pressure to a slave cylinder (700) in which a first piston (702) and a second piston (706) are provided, wherein the first piston (702) is slid in the cylinder (700) to disengage and engage a clutch (200), the second piston (706) is formed separately from the first piston (702), the second piston (706) forms a portion of an oil chamber (714) to which the hydraulic pressure is supplied, the second piston (706) is slid in the cylinder (700) to move the first piston (702), by the hydraulic pressure supplied to the oil chamber (714), and the second piston (706) is moved a distance corresponding to an operation amount of the actuator (720), the control apparatus comprising:
means (530) configured to detect the operation amount of the actuator (720);
**characterized by** further comprising:
control means (532) configured to control the actuator (720) so that the clutch (200) is repeatedly disengaged and engaged for supplying hydraulic fluid to the oil chamber (714) until a positive hydraulic pressure is reached in the oil chamber (714); and
learning means (534) configured to perform an initial learning of the operation amount of the actuator (720) at a time point at which engagement of the clutch (200) starts, after the clutch (200) is repeatedly disengaged and engaged for supplying the hydraulic fluid to the oil chamber (714) until the positive hydraulic pressure is reached in the oil chamber (714), wherein
the control means (532) is further configured to control the actuator (720) so that the clutch (200) is repeatedly disengaged and engaged, if there is no history indicating that the operation amount of the actuator (720) at the time point at which the engagement of the clutch (200) starts has been initially learned.

2. The control apparatus for the actuator according to claim 1, wherein
the control means (532) is configured to control the actuator (720) so that the clutch (200) is repeatedly disengaged and engaged a predetermined number of times.

3. The control apparatus for the actuator according to claim 1 or 2, wherein
the clutch (200) is provided between a drive power source (100) and a transmission (300); and
the learning means (534) is configured to initially learn the operation amount of the actuator (720) at a time point at which an output rotational speed of the drive power source (100) starts to decrease when the actuator (720) is controlled to change a state of the clutch (200) from a disengaged state to an engaged state, as the operation amount of the actuator (720) at the time point at which the engagement of the clutch (200) starts.

4. A control method for an actuator (720) that supplies a hydraulic pressure to a slave cylinder (700) in which a first piston (702) and a second piston (706) are provided, wherein the first piston (702) is slid in the cylinder (700) to disengage and engage a clutch (200), the second piston (706) is formed separately from the first piston (702), the second piston (706) forms a portion of an oil chamber (714) to which the hydraulic pressure is supplied, the second piston (706) is slid in the cylinder (700) to move the first piston (702), by the hydraulic pressure supplied to the oil chamber (714), and the second piston (706) is moved a distance corresponding to an operation amount of the actuator (720), the control method being **characterized by** comprising the steps of:
controlling (S102) the actuator (720) so that the clutch (200) is repeatedly disengaged and engaged for supplying a hydraulic fluid to the oil chamber (714) until a positive hydraulic pressure is reached in the oil chamber (714);
performing an initial learning (S104) of the operation amount of the actuator (720) at a time point at which engagement of the clutch (200) starts, after the clutch (200) is repeatedly disengaged and engaged for supplying the hydraulic fluid to the oil chamber (714) until the positive hydraulic pressure is reached in the oil chamber (714), and
determining (S100) whether there is a history indicating that the operation amount of the actuator (720) at the time point at which the engagement of the clutch (200) starts has been initially learned,
wherein
if there is no history indicating that the operation amount of the actuator (720) at the time point at which the engagement of the clutch (200) starts has been initially learned, the actuator (720) is controlled so that the clutch (200) is repeatedly disengaged and engaged.

5. The control method for the actuator according to claim 4, wherein
in the step of controlling (S102) the actuator (720) so that the clutch (200) is repeatedly disengaged and engaged, the actuator (720) is controlled so that the clutch (200) is repeatedly disengaged and engaged a predetermined number of times.

6. The control method for the actuator according to claim 4 or 5, wherein
the clutch (200) is provided between a drive power source (100) and a transmission (300); and
the operation amount of the actuator (720) at a time point at which an output rotational speed of the drive power source (100) starts to decrease when the actuator (720) is controlled to change a state of the clutch (200) from a disengaged state to an engaged state is learned initially as the operation amount of the actuator (720) at the time point at which the engagement of the clutch (200) starts.

## Patentansprüche

1. Steuerungsvorrichtung für eine Betätigungseinrichtung (720), die einen hydraulischen Druck einem Nehmerzylinder (700) zuführt, in dem ein erster Kolben (702) und ein zweiter Kolben (706) bereitgestellt sind, wobei der erste Kolben (702) in den Zylinder geschoben wird, um eine Kupplung (200) auszukuppeln und einzukuppeln, der zweite Kolben (706) getrennt von dem ersten Kolben (702) ausgebildet ist, der zweite Kolben (706) einen Abschnitt einer Ölkammer (714) bildet, zu der der hydraulische Druck zugeführt wird, der zweite Kolben (706) durch den hydraulischen Druck, der der Ölkammer (714) zugeführt wird, in den Zylinder (700) geschoben wird, um den ersten Kolben (702) zu bewegen, und der zweite Kolben (706) eine Strecke bewegt wird, die einer Betätigungsgröße der Betätigungseinrichtung (720) entspricht, wobei die Steuerungsvorrichtung umfasst:
eine Einrichtung (530), die konfiguriert ist, die Betätigungsgröße der Betätigungseinrichtung (720) zu erfassen,
ferner **gekennzeichnet durch**:
eine Steuerungseinrichtung (532), die konfiguriert ist, die Betätigungseinrichtung (720) derart zu steuern, dass die Kupplung (200) für ein Zuführen einer hydraulischen Flüssigkeit zu der Ölkammer (714) wiederholt ausgekuppelt und eingekuppelt wird, bis ein positiver hydraulischer Druck in der Ölkammer (714) erreicht ist, und
eine Lerneinrichtung (534), die konfiguriert ist, ein anfängliches Lernen der Betriebsgröße der Betätigungseinrichtung (720) zu einem Zeitpunkt auszuführen, bei dem ein Einkuppeln der Kupplung (200) startet, nachdem die Kupplung (200) für ein Zuführen der hydraulischen Flüssigkeit zu der Ölkammer (714) wiederholt ausgekuppelt und eingekuppelt wird, bis der positive hydraulische Druck in der Ölkammer (714) erreicht ist, wobei
die Steuerungseinrichtung (532) ferner konfiguriert ist, die Betätigungseinrichtung (720) derart zu steuern, dass die Kupplung (200) wiederholt ausgekuppelt und eingekuppelt wird, wenn es keine Historie gibt, die anzeigt, dass die Betätigungsgröße der Betätigungseinrichtung (720) zu dem Zeitpunkt, bei dem das Einkuppeln der Kupplung (200) startet, anfänglich gelernt worden ist.

2. Steuerungsvorrichtung für die Betätigungseinrichtung nach Anspruch 1, wobei
die Steuerungseinrichtung (532) konfiguriert ist, die Betätigungseinrichtung (720) derart zu steuern, dass die Kupplung (200) eine vorbestimmte Anzahl von Malen wiederholt ausgekuppelt und eingekuppelt wird.

3. Steuerungsvorrichtung für die Betätigungseinrichtung nach Anspruch 1 oder 2, wobei
die Kupplung (200) zwischen einer Antriebsleistungsquelle (100) und einem Getriebe (300) bereitgestellt ist, und
die Lerneinrichtung (534) konfiguriert ist, die Betätigungsgröße der Betätigungseinrichtung (720) zu dem Zeitpunkt, bei dem eine Ausgangsdrehzahl der Antriebsleistungsquelle (100) beginnt abzunehmen, wenn die Betätigungseinrichtung (720) gesteuert wird, um einen Zustand der Kupplung (200) von einem ausgekuppelten Zustand zu einem eingekuppelten Zustand zu ändern, als die Betätigungsgröße der Betätigungseinrichtung (720) zu dem Zeitpunkt anfänglich zu lernen, bei dem das Einkuppeln der Kupplung (200) beginnt.

4. Steuerungsverfahren für eine Betätigungseinrichtung (720), die einen hydraulischen Druck zu einem Nehmerzylinder (700) zuführt, in dem ein erster Kolben (702) und ein zweiter Kolben (706) bereitgestellt sind, wobei der erste Kolben (702) in den Zylinder (700) geschoben wird, um eine Kupplung (200) auszukuppeln und einzukuppeln, der zweite Kolben (706) getrennt von dem ersten Kolben (702) ausgebildet ist, der zweite Kolben (706) einen Abschnitt einer Ölkammer (714) ausbildet, zu der der hydraulische Druck zugeführt wird, der zweite Kolben (706) durch den hydraulischen Druck, der der Ölkammer (714) zugeführt wird, in den Zylinder (700) geschoben wird, um den ersten Kolben (702) zu bewegen, und der zweite Kolben (706) eine Strecke bewegt wird, die einer Betätigungsgröße der Betätigungseinrichtung (720) entspricht, wobei das Steuerungsverfahren **gekennzeichnet ist durch** Schritte:
zum Steuern (S102) der Betätigungseinrichtung (720), sodass die Kupplung (200) wiederholt für ein Zuführen einer hydraulischen Flüssigkeit zu der Ölkammer (714) ausgekuppelt und eingekuppelt wird, bis ein positiver hydraulischer Druck in der Ölkammer (714) erreicht ist,
zum Ausführen eines anfänglichen Lernens (S104) der Betätigungsgröße der Betätigungseinrichtung (720) zu einem Zeitpunkt, bei dem ein Einkuppeln der Kupplung (200) startet, nachdem die Kupplung (200) wiederholt für ein Zuführen der hydraulischen Flüssigkeit zu der Ölkammer (714) ausgekuppelt und eingekuppelt wird, bis der positive hydraulische Druck in der Ölkammer (714) erreicht ist, und
zum Bestimmen (S100), ob es eine Historie gibt, die angibt, dass die Betätigungsgröße der Betätigungseinrichtung (720) zu dem Zeitpunkt, bei dem das Einkuppeln der Kupplung (200) startet, anfänglich gelernt worden ist,
wobei,
wenn es keine Historie gibt, die angibt, dass die Betätigungsgröße der Betätigungseinrichtung (720) zu dem Zeitpunkt, bei dem das Einkuppeln der Kupplung (200) startet, anfänglich gelernt worden ist, die Betätigungseinrichtung (720) derart gesteuert wird, dass die Kupplung (200) wiederholt ausgekuppelt und eingekuppelt wird.

5. Steuerungsverfahren für die Betätigungseinrichtung nach Anspruch 4, wobei
in dem Schritt zum Steuern (S102) der Betätigungseinrichtung (720), sodass die Kupplung (200) wiederholt ausgekuppelt und eingekuppelt wird, die Betätigungseinrichtung (720) derart gesteuert wird, dass die Kupplung (200) eine vorbestimmte Anzahl von Malen wiederholt ausgekuppelt und eingekuppelt wird.

6. Steuerungsverfahren für die Betätigungseinrichtung nach Anspruch 4 oder 5, wobei
die Kupplung (200) zwischen einer Antriebsleistungsquelle (100) und einem Getriebe (300) bereitgestellt ist, und
die Betätigungsgröße der Betätigungseinrichtung (720) zu einem Zeitpunkt, bei dem die Ausgangsdrehgeschwindigkeit der Antriebsleistungsquelle (100) beginnt abzunehmen, wenn die Betätigungseinrichtung (720) gesteuert wird, um einen Zustand der Kupplung (200) von einem ausgekuppelten Zustand zu einem eingekuppelten Zustand zu ändern, als die Betätigungsgröße der Betätigungseinrichtung (720) zu dem Zeitpunkt, bei dem das Einkuppeln der Kupplung (200) startet, anfänglich gelernt wird.

## Revendications

1. Appareil de commande pour un actionneur (720) qui fournit une pression hydraulique à un cylindre esclave (700) dans lequel un premier piston (702) et un second piston (706) sont prévus, le premier piston (702) coulissant dans le cylindre (700) pour engager et désengager un embrayage (200), le second piston (706) étant formé séparément du premier piston (702), le second piston (706) formant une partie d'une chambre d'huile (714) à laquelle la pression hydraulique est fournie, le second piston (706) coulissant dans le cylindre (700) pour déplacer le premier piston (702), grâce à la pression hydraulique fournie à la chambre d'huile (714) et le second piston (706) étant déplacé d'une distance correspondant à une quantité de manoeuvre de l'actionneur (720), l'appareil de commande comprenant :
des moyens (530) configurés pour détecter la quantité de manoeuvre de l'actionneur (720) ;
**caractérisé en ce qu'**il comprend en outre ;
des moyens de commande (532) configurés pour commander l'actionneur (720) de telle sorte que l'embrayage (200) soit désengagé et engagé de façon répétée pour fournir du fluide hydraulique à la chambre d'huile (714) jusqu'à ce qu'une pression hydraulique positive soit atteinte dans la chambre d'huile (714) ; et
des moyens d'apprentissage (534) configurés pour procéder à un apprentissage initial de la quantité de manoeuvre de l'actionneur (720) à un moment auquel l'engagement de l'embrayage (200) débute, après que l'embrayage (200) a été désengagé et engagé de façon répétée pour fournir le fluide hydraulique à la chambre d'huile (714) jusqu'à ce que la pression hydraulique positive soit atteinte dans la chambre d'huile (714), dans lequel
les moyens de commande (532) sont en outre configurés pour commander l'actionneur (720) de telle sorte que l'embrayage (200) soit désengagé et engagé de façon répétée, s'il n'existe aucun historique indiquant que la quantité de manoeuvre de l'actionneur (720) a été initialement apprise au moment auquel l'engagement de l'embrayage (200) débute.

2. Appareil de commande de l'actionneur selon la revendication 1, dans lequel les moyens de commande (532) sont configurés pour commander l'actionneur (720) de telle sorte que l'embrayage (200) soit désengagé et engagé de manière répétée un nombre de fois prédéterminé.

3. Appareil de commande de l'actionneur selon la revendication 1 ou 2, dans lequel
l'embrayage (200) est prévu entre une source de puissance d'entraînement (100) et une transmission (300) ; et
les moyens d'apprentissage (534) sont configurés pour apprendre initialement la quantité de manoeuvre de l'actionneur (720) à un moment auquel une vitesse de rotation de sortie de la source de puissance d'entraînement (100) commence à diminuer lorsque l'actionneur (720) est commandé pour modifier un état de l'embrayage (200) d'un état désengagé à un état engagé, en tant que quantité de manoeuvre de l'actionneur (720) au moment auquel l'engagement de l'embrayage (200) débute.

4. Procédé de commande d'un actionneur (720) qui fournit une pression hydraulique à un cylindre esclave (700) dans lequel un premier piston (702) et un second piston (706) sont prévus, le premier piston (702) coulissant dans le cylindre (700) pour désengager et engager un embrayage (200), le second piston (706) étant formé séparément du premier piston (702), le second piston (706) formant une partie d'une chambre d'huile (714) à laquelle la pression hydraulique est fournie, le second piston (706) coulissant dans le cylindre (700) pour déplacer le premier piston (702), grâce à la pression hydraulique fournie à la chambre d'huile (714) et le second piston (706) étant déplacé d'une distance correspondant à une quantité de manoeuvre de l'actionneur (720), le procédé de commande étant **caractérisé en ce qu'**il comprend les étapes consistant à :
commander (S102) l'actionneur (720) de telle sorte que l'embrayage (200) soit désengagé et engagé de façon répétée pour fournir un fluide hydraulique à la chambre d'huile (714) jusqu'à ce qu'une pression hydraulique positive soit atteinte dans la chambre d'huile (714) ;
procéder à un apprentissage initial (S104) de la quantité de manoeuvre de l'actionneur (720) à un moment auquel l'engagement de l'embrayage (200) débute, après que l'embrayage (200) a été désengagé et engagé de façon répétée pour fournir le fluide hydraulique à la chambre d'huile (714) jusqu'à ce que la pression hydraulique positive soit atteinte dans la chambre d'huile (714) ; et
déterminer (S100) s'il existe un historique indiquant que la quantité de manoeuvre de l'actionneur (720) a été initialement apprise au moment auquel l'engagement de l'embrayage (200) débute,
dans lequel
s'il n'existe aucun historique indiquant que la quantité de manoeuvre de l'actionneur (720) a été initialement apprise au moment auquel l'engagement de l'embrayage (200) débute, l'actionneur (720) est commandé de telle sorte que l'embrayage (200) soit désengagé et engagé de façon répétée.

5. Procédé de commande de l'actionneur selon la revendication 4, dans lequel
dans l'étape de commande (S102) de l'actionneur (720) de sorte que l'embrayage (200) soit désengagé et engagé de façon répétée, l'actionneur (720) est commandé de telle sorte que l'embrayage (200) soit désengagé et engagé de façon répétée un nombre de fois prédéterminé.

6. Procédé de commande de l'actionneur selon la revendication 4 ou 5, dans lequel
l'embrayage (200) est prévu entre une source de puissance d'entraînement (100) et une transmission (300) ; et
la quantité de manoeuvre de l'actionneur (720) à un moment auquel une vitesse de rotation de sortie de la source de puissance d'entraînement (100) commence à diminuer lorsque l'actionneur (720) est commandé pour modifier un état de l'embrayage (200) d'un état désengagé à un état engagé est apprise initialement, en tant que quantité de manoeuvre de l'actionneur (720) au moment auquel l'engagement de l'embrayage (200) débute.
